# EUROPEAN PATENT SPECIFICATION

(11) **EP 2 002 251 B1**
(45) Date of publication and mention of the grant of the patent: **04.11.2015**
(21) Application number: 07724064.6
(22) Date of filing: 05.04.2007
(51) Int. Cl.: G01N 27/403, G01N 27/49

(54) **OXYGEN SENSOR**
SAUERSTOFFSENSOR
CAPTEUR D'OXYGÈNE

(30) Priority: 06.04.2006 EP 06007307
(43) Date of publication of application: 17.12.2008
(73) Proprietor: Life Safety Germany GmbH, 80687 München (DE)
(72) Inventor: ECKHARDT, Rolf, 63755 Alzenau (DE)
(74) Representative: Weickmann & Weickmann
(86) International application number: PCT/EP2007/003123
(87) International publication number: WO 2007/115801

(56) References cited:
- DE-A1- 4 231 256
- US-A- 4 406 770
- US-A- 5 830 337
- US-A- 5 932 079
- US-A- 6 024 853
- US-A1- 2004 222 093
- US-B1- 6 666 963

## Description

The present invention relates to an electrochemical oxygen sensor (1), comprising a housing (12) enclosing a chamber filled with electrolyte, at least one measuring electrode (6) for detecting oxygen, at least one counter electrode (5), and at least one reference electrode (9), wherein the housing (12) comprises at least one first aperture (2) for allowing oxygen to contact the measuring electrode and at least one second aperture (3) for allowing oxygen to escape from the chamber, wherein the counter electrode (5) is disposed adjacent to the second aperture (3), wherein the first (2) and the second (3) apertures are disposed on the same side of the sensor housing (12) and the measuring electrode (6) and the counter electrode (5) are disposed on the same side of the housing, wherein at least one isolating device (11) is interposed between the measuring electrode (6) and the counter electrode (5).

Oxygen sensors are known in the art. The most commonly used oxygen sensors are based on the principle of oxidation of a lead anode. Such sensors have been known for more than 30 years, however, they have the great disadvantage of presenting environmental hazards. In particular with regard to the European Electronic Directive (2002/95/EG) such sensors are now out-dated,

Since the 1990s, there have been attempts to provide lead-free oxygen sensors. One way of avoiding lead is the use of substitute materials such as zinc or silver for the electrodes. Another type of oxygen sensors of the state of the art are so-called oxygen pumps. An example of an oxygen pump are lambda probes such as those disclosed in EP 0 144 057 A2. This category of oxygen pumps operates only at high temperatures and uses solid electrolytes. Such oxygen pumps are not subject of the present invention. The other category of oxygen pumps uses a liquid electrolyte and is used at room temperature.

The basic principle of an oxygen pump is based on the fact that at the measuring electrode, O₂ is reduced to 20²⁻, and at the counter electrode, the 2O²⁻ are oxidised (e.g. from the water of the electrolyte) to give O₂. This reaction is maintained by means of a reference electrode which lowers the potential at the measuring electrode by several hundred mV and thus allows the reaction to proceed. The resulting current between the measuring electrode and the counter electrode is proportional to the oxygen concentration of the environment. In contrast to lead-containing sensors, there is no consuming reaction in which the electrodes themselves are consumed.

In the state of the art, oxygen from the air can be measured using standard sintered noble metal electrodes. Such sensors are disclosed in DE 196 22 931 C2 and DE 42 31 256 C2. Such electrodes had to be made of sintered metals and were adjusted to a bias of -300 to -800 mV, in order to minimize sensitivities with regard to CO and H₂S and in order to prevent poisoning of the measuring electrode (cf. K. Vetter: Elektrochemische Kinetik, 1961, p. 504).

Subsequent studies have shown that sintered electrodes are not strictly necessary for measuring oxygen, but that it is possible to use electrodes which have been used for gas sensors in the past (see, for instance, US 3,328,277). The reference electrode functions as an air oxygen electrode.

All the sensors known in the art required a large distance between the reference electrode and the measuring electrode in order to ensure a sufficient current or diffusion potential. According to Vetter (see above), the equilibrium current of the Pt/air reference electrode shifts by 10 mV if the oxygen partial pressure is reduced to 0.09 atm. It is possible to use the oxygen pump sensor for a while even without the presence of oxygen because the naturally occurring PtO layer on the platinum provides a stable Pt/oxygen balance and avoids a drift of the reference electrode. This has been shown by Bockris & Shamshul Huq (Proc. Royal Society.A, 1956, p. 237). In order to observe the above-mentioned shift in the absence of oxygen, the platinum electrodes had to be cleaned for days under harsh conditions.

In order for oxygen sensors to work, a sufficient O₂ gradient between the measuring electrode, where oxygen is reduced, and the counter electrode, where O²⁻ ions are oxidized to elementary oxygen, has to be maintained.

Ideally, all the oxygen contacting the measuring electrode from the sample should be immediately reduced to 2O²⁻. This reaction takes place at the three-phase interface of the metal component of the electrode, the electrolyte and the gas phase through which the oxygen to be detected contacts the measuring electrode. Thus, in the electrolyte environment around the measuring electrode, the oxygen concentration should be as close to 0 % as possible. Otherwise, a sufficient oxygen gradient between the measuring electrode and the counter electrode cannot be maintained and the sensor will work too slowly.

The time which is required for the oxygen concentration to drop from the starting oxygen concentration (e.g. the normal oxygen concentration of air which is 20.9 %) to a sample oxygen concentration is called the response time. Usually, the response time is given as the value when 90 % of concentration drop has been achieved (T(90) value). If, for example, the sensor signal is -300 µA for 20.9 % oxygen and the sensor signal is -4 µA for 0 % oxygen, the T(90) value is the time measured from the starting oxygen concentration to the point when the sensor signal is -29.4 µA. The T(90) should be between 3 and 45 seconds.

The oxygen gradient can be weakened or destroyed by a number of factors. One is that not enough oxygen is consumed at the three-phase interface, e.g. because too much oxygen enters from the outside. Another problem is back diffusion of oxygen, generated at the counter electrode, through the electrolyte to the measuring electrode. Depending on the gradient and the type of electrolyte, as well as a number of other factors, the diffusion velocity of oxygen is in the order of several mm per hour. An oxygen sensor should be constructed so that the oxygen gradient is sufficient so that the diffusion time for oxygen is larger than the response time of the sensor.

In the art, several solutions have been proposed to achieve a sufficient oxygen gradient.

In DE 196 22 930 C2, the measuring electrode and the counter electrode are disposed with a large difference between them. This has the disadvantage not only of requiring a larger housing but also that according to Ohm's Law, the inner resistance of the sensor is increased, which means that the sensor will work more slowly. Another disadvantage of placing the electrodes at a distance to one another is that electrolyte contact within the sensor has to be maintained between the electrodes, which is difficult to achieve with portable sensors.

Another way to maintain the strong O₂ gradient between the measuring electrode and the counter electrode has been proposed in DE 197 26 453, which proposes to use a fourth electrode as a protective electrode which is located between the measuring and the counter electrode and which serves to protect the measuring electrode from any oxygen that may have diffused back through the electrolyte.

Another way of ensuring the O₂ gradient has been proposed in the art in DE 198 45 318 C2, which uses oxygen permeable sensor walls through which oxygen gas can escape so that any O₂ pressure can be eliminated without oxygen diffusing back to the measuring electrode. However, in practice, such oxygen permeable walls are not sufficient to maintain mechanical stability of the sensor. Due to the gas-permeable nature of the sensor housing, its constructions is necessarily more complicated because it makes a stabilizing frame necessary, e.g. a second housing.

US 6,666,963 B1 discloses an electrochemical oxygen sensor comprising a working electrode, at least one counter electrode and at least one reference electrode, wherein in view of the working electrode the counter electrode is disposed at the opposite end of the sensor housing. Further, the sensor comprises a gas communication means connecting the counter electrode to the air space over the electrolyte. The sensor output of the disclosed sensor stabilizes after about 24 hours.

The object of the present invention is therefore the provision of an electrochemical oxygen sensor which avoids the above-mentioned disadvantages of the oxygen sensors known in the art.

This object is achieved with an electrochemical oxygen sensor according to claim 1. Such an electrochemical oxygen sensor comprises a housing (12) enclosing a chamber filled with electrolyte, at least one measuring electrode (6) for detecting oxygen, at least one counter electrode (5), and at least one reference electrode (9), wherein the housing (12) comprises at least one first aperture (2) for allowing oxygen to contact the measuring electrode and at least one second aperture (3) for allowing oxygen to escape from the chamber, wherein the counter electrode (5) is disposed adjacent to the second aperture (3), wherein the first (2) and the second (3) apertures are disposed on the same side of the sensor housing (12) and the measuring electrode (6) and the counter electrode (5) are disposed on the same side of the housing, wherein at least one isolating device (11) is interposed between the measuring electrode (6) and the counter electrode (5).

Such a sensor is useful for detecting oxygen in a sample, in particular a gas, such as air. It is preferably also useful for measuring the oxygen concentration in a sample, for instance the air of the environment.

The sensor response time T(90) for the sensor of the present invention is preferably under 1 minute, preferably between 3 seconds and 50 seconds and more preferably in the range of 10 to 30 seconds, more preferably around 20 seconds.

The oxygen gradient should be such that only just enough oxygen contacts the measuring electrode from a sample so that all the oxygen can be immediately reduced and thus consumed at the three-phase interface of the measuring electrode. The time for the oxygen to be reduced should be shorter than the response time of the sensor. For the purposes of the present invention, the consuming reaction should preferably be at least a factor of 10 faster than the response time, preferably at least a factor of 12, more preferably at least 15.

When the response time is in the range of 3 to 50 seconds, the consuming reaction should preferably take less than 5 seconds, preferably less than 4 seconds, more preferably less than 3 seconds, more preferably less than 1 second, more preferably less than 0.5 seconds, preferably less than 0.4 seconds, more preferably less than 0.3 seconds.

In the electrolyte environment of the measuring electrode, the oxygen concentration should be as close to 0 % as possible. This means that preferably, all the oxygen reaching the measuring electrode from the sample or the environment in which the oxygen is to be detected, should be consumed immediately at the three-phase interface.

The sensor of the present invention is advantageous because it allows the oxygen which is generated at the counter electrode to escape from the chamber without the risk of being dissipated within the electrolyte or along other spaces within the chamber.

The sensor housing can be made of any suitable material known in the art. The housing may be in one piece, or it may have a lid, or be constructed of several components.

The housing comprises a first aperture for allowing oxygen from the environment to contact a measuring electrode and a second aperture for allowing oxygen to escape into the environment.

The sensor comprises at least one measuring electrode for detecting oxygen, at least one counter electrode, and at least one reference electrode. Preferably, the sensor comprises one of each type of electrodes, but there may be more than one present.

The at least one first aperture is disposed in the housing. It is preferably disposed in the lid if a lid is present, but it may be disposed in any art of the housing. It preferably comprises a diffusion barrier such as they are known in the state of the art for restricting the flow of oxygen from the sample to the measuring electrode in an oxygen sensor. The diffusion barrier may be selected from films, membranes and capillaries. When a film, preferably a diffusion film or a membrane, is used as a diffusion barrier, it is preferably chosen from a material selected from polymers and it should preferably be acid resistant.

Since the inside of the chamber of the sensor is filled with an electrolyte, the diffusion barrier should also constitute a seal to the outside environment. Preferably, the film or membrane is selected from any acid resistant polymer such as polytetrafluoroethylene (PTFE), perfluoroalkoxy (PFA), ethylene chlorotrifluoroethylene (E-CTFE) and fluoroethylene polymer (FEP), polypropylene, etc. The skilled person would be able to select suitable materials for the diffusion barrier for the first aperture. Preferably, the first aperture represents a capillary. Such capillaries are known in the art and the skilled person will be able to select suitable capillaries for the above purpose.

The at least one second aperture is disposed adjacent to the counter electrode and serves to allow the oxygen generated at the counter electrode to escape from the chamber so that the oxygen cannot accumulate within the chamber and cause problems such as increased pressure or increased back diffusion.

The second aperture is thus preferably a vent. It should also be sealed to the environment to prevent electrolyte from leaking from the housing. The second aperture is therefore suitably closed by a membrane or seal which is oxygen permeable. Depending on the size and shape of the counter electrode, there may be one or several second apertures. In a preferred embodiment, where the counter electrode is circular, there are preferably at least 4, preferably 6, more preferably 8 second apertures. Preferably, those apertures adjacent to the counter electrode are disposed on the same side of the sensor housing as the first aperture.

In the state of the art (cf. for example US 6,666,963 B1), it has been thought that it was disadvantageous to degas the sensor at a site close to the aperture which is responsible for the contact between the outside environment and the aperture for the measuring electrode. The reason was that it was thought that the oxygen generated would increase the local oxygen concentration of the environment and thus lead to incorrect measurements or a slow response of the sensor. However, the present inventors have found that this is not the case and that a sensor which contains the first and second apertures on the same side of the sensor housing works as well if not better than sensors not having this particular arrangement of apertures. Thus, according to the invention, the first and second apertures are arranged on the same side of the sensor housing.

The material of the membrane or seal closing the second aperture can be suitably chosen by the skilled person. It needs to be oxygen permeable and should preferably be also acid-resistant.

The membrane or seal closing the second aperture may be made of any oxygen-permeable material, such as the membranes also used for the first aperture. PTFE is particularly preferred.

The oxygen sensor further contains an isolating device which is interposed between the measuring electrode and the counter electrode.

The isolating device can be made of any impermeable material selected from plastics, ceramics, metal and glass. Impermeable in the sense of the present invention means impermeable for oxygen. Preferably, the material should also be non-conducting, and preferably it should also be acid resistant so that the isolating device can safely be used together with an acid electrolyte.

Preferably, the measuring electrode and the counter electrode are disposed in close proximity, wherein a sufficient potential between the measuring electrode and the counter electrode is ensured by the isolating device separating the measuring electrode from the counter electrode. Placing the two electrodes in close proximity has the advantage of reducing the overall size of the sensor. Thus, the amount of electrolyte required can also be reduced.

The isolating device also serves to maintain a sufficient oxygen gradient between the electrodes. For the oxygen sensor of the present invention, it is important that a sufficient oxygen concentration gradient is maintained between the measuring electrode and the counter electrode. Whereas this has normally been achieved in the past by placing a sufficient distance between the electrodes, the present invention now allows for the electrodes to be placed in close proximity as long as the isolating device is interposed between them.

The isolating device should be of sufficient dimensions and/or disposed in such a way so that the time for the diffusion of oxygen from the counter electrode to the measuring electrode is longer than the response time of the sensor. Thus, the isolating device ensures a sufficient diffusion distance between the electrodes. The diffusion distance that needs to be maintained between the measuring electrode and the counter electrode should preferably at least 1 mm, more preferably 2, 3, 4 or 5 mm, depending on the size and dimensions of the sensor housing. The isolating device protects the measuring electrode from back diffusion of oxygen through the electrolyte and helps to maintain a sufficient oxygen gradient.

The isolating device can have any shape, depending on the overall shape and position of the electrodes and the overall shape of the sensor. Preferably, the isolating device is planar, box-shaped or cylindrical. It is preferred that the isolating device has the shape of a box or cylinder enclosing the measuring electrode. At the side facing the inside of the chamber, the box or cylinder is open so that there is electrolyte contact between the measuring and the counter electrodes. Because the isolating device is impermeable, the distance between the measuring electrode and the counter electrode can be increased even when they are placed more or less adjacent to one another.

The isolating device may be a separate component to the housing or it may be part of the housing of the sensor. In a particularly preferred embodiment, the housing comprises a lid which comprises the isolating device. For example, the isolating device may be in the form of an open cylinder which is attached to the lid or part of the lid. Preferably, the isolating device is of sufficient dimensions that the oxygen concentration at the measuring electrode is maintained at 0 % or close to 0 %.

Preferably, the measuring electrode and the counter electrode are disposed on the same plane, although they may be slightly offset with regard to one another. Preferably, the measuring electrode is placed at the centre, and the counter electrode is non-centred, or the other way around.

In a particularly preferred embodiment, the electrodes are arranged concentrically with respect to each other, in particular, it is preferred that the measuring electrode and the counter electrode are in a concentric arrangement. The measuring electrode may be disposed at the centre, whereas the counter electrode may form a ring around the measuring electrode. Alternatively, the counter electrode can be at the centre whereas the measuring electrode forms a ring around it. Such an arrangement is particularly preferred for cylindrical sensors.

According to the invention, the measuring electrode and the counter electrode are disposed on the same side of the housing, preferably in the same plane, although they may be slightly offset with regard to one another as stated above.

Preferably, the measuring electrode and the counter electrode are disposed on one side of the inside of the sensor housing.

The reference electrode can be placed either on the same side as the other two electrodes, with regard to the sensor chamber, or it may be placed anywhere in the sensor chamber. The reference electrode is preferably also in the form of a ring, thus it may have any other suitable shape such as a disc, a sheet or such like.

The electrodes are preferably independently made from metals of the Pt, Ir or Cu group of the periodic system. They may be of the same material or made each from different material. Preferred metals for the electrodes are Pt, Ir, Au, Pd, Ru and Ag. For the measuring electrode, Pt and/or Au and/or Ir are preferred. For the reference electrode, Pt and/or Ir and/or Ag are preferred. For the counter electrode, Pt and/or Ir and/or Pd and/or Au are preferred. Alloys or metal mixtures are also possible.

The electrolyte is any aqueous electrolyte, preferably an acidic electrolyte such as any hygroscopic acid, preferably sulphuric acid, or it can also be an organic electrolyte.

The electrolyte preferably contains at least 1% water, preferably at least 2%, more preferably at least 5%, more preferably at least 10%.

Another aspect of the present invention is a method for detecting and/or measuring oxygen, comprising the steps of
(a) providing an oxygen sensor according to claim 1,
(b) generating a bias between the measuring electrode and the reference electrode of -300 mV to -800mV,
(c) allowing an oxygen gradient to form between the measuring electrode and the counter electrode,
(d) contacting the measuring electrode with a sample containing oxygen to be detected,
(e) detecting the current between the measuring electrode and the counter electrode, wherein the current is proportional to the oxygen concentration of the sample,
wherein the oxygen gradient is maintained by
(i) allowing the oxygen generated at the counter electrode to escape from the chamber at the site of its generation, and/or
(ii) interposing an isolating device between the measuring electrode and the counter electrode in such a way that the time for the diffusion of oxygen from the counter electrode to the measuring electrode is longer than the response time of the sensor.

The oxygen concentration gradient between the measuring electrode and the counter electrode is preferably maintained by preventing the diffusion of oxygen generated at the counter electrode to the measuring electrode by interposing an isolating device between the measuring electrode and the counter electrode. The thickness of the isolating device and/or its dimensions should ensure that the diffusion distance between the measuring electrode and the counter electrode is at least 1 mm, preferably 2, more preferably 3, even more preferably 4 and more preferably 5 mm. However, it can also be larger.

In a preferred embodiment of the invention, the electrochemical oxygen sensor output stabilizes after less than 60 minutes, preferably less than 30 minutes and most preferably less than 20 minutes.

In a further preferred embodiment, the assembly of the sensor according to the invention is automatized.

The present invention is illustrated by means of the following Examples and Figures.
Figure 1 shows a schematic representation of the oxygen sensor of the present invention.
Figure 2 shows a a schematic representation of the oxygen sensor of the present invention viewed from inside out.

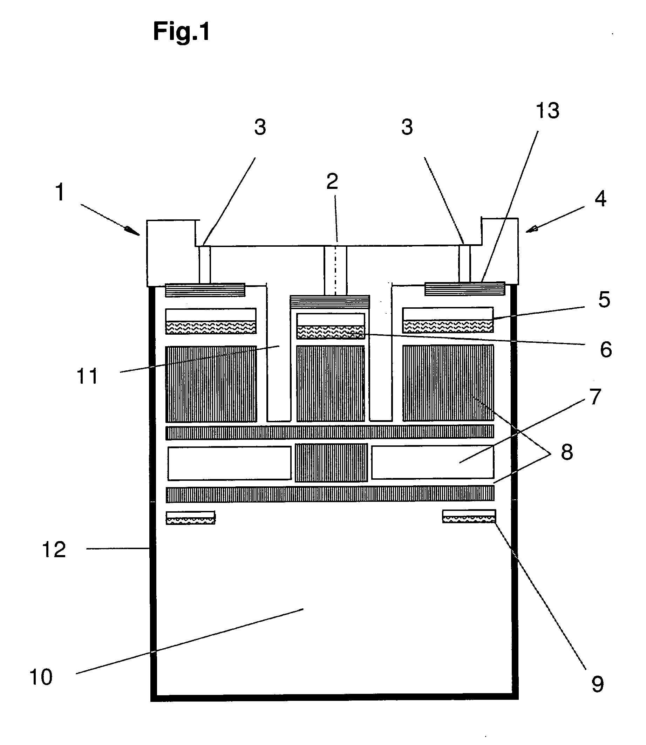

The oxygen sensor (1) shown in Figure 1 comprises a housing (12) and a lid (4) which is fitted with seals (13). The inside of the housing is filled with electrolyte-soaked separators (8). On the side of the lid (4), the measuring electrode (6) and the counter electrode (5) are disposed. The counter electrode (5) is in the form of a ring. The lid (4) comprises a gas diffusion barrier (2) in the form of a capillary as well as vents (3).

Opposite the measuring electrode and the counter electrode, the reference electrode (9) is disposed and separated from the chamber by an isolator ring. The measuring electrode (6) is encased in an open cylinder, representing the isolating device (11). In this particular embodiment, the isolating device (11) forms part of the lid (4) of the sensor (1). The inside of the sensor further comprises an expansion space (10) for the electrolyte.

Between the counter and measuring electrodes and the reference electrode, an isolator ring (7) is disposed. Electrolyte-soaked separators (8) are disposed between the electrodes.

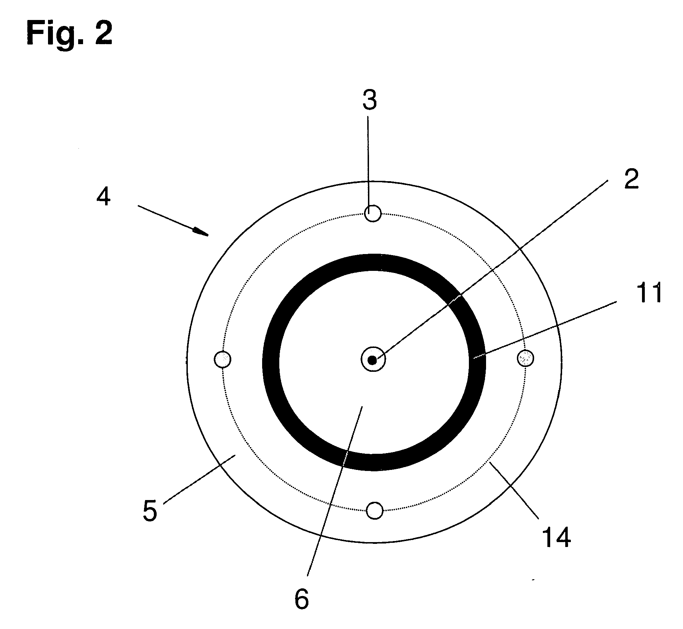

Figure 2 shows the top of the lid (4) of the oxygen sensor (1) of the present invention, showing the first aperture (2) which serves to allow oxygen to enter the chamber and contact the measuring electrode (6). Further, due to the concentric arrangement of the counter electrode (5) with respect to the measuring electrode (6), there are four second apertures (3). The isolating device (11) separating the measuring electrode (6) and the counter electrode (5) is represented by the black circle. In this case, the isolating device (11) is an open cylinder which extends into the chamber and is attached to the lid (4). The counter electrode (5) and the measuring electrode (6) are not shown but are rather disposed underneath the lid (4) shown in Figure 2. The dotted line (14) represents a connection between the second aperture (3) through which oxygen can move freely.

## Claims

1. An electrochemical oxygen sensor (1), comprising a housing (12) enclosing a chamber filled with electrolyte, at least one measuring electrode (6) for detecting oxygen, at least one counter electrode (5), and at least one reference electrode (9), wherein the housing (12) comprises at least one first aperture (2) for allowing oxygen to contact the measuring electrode and at least one second aperture (3) for allowing oxygen to escape from the chamber, wherein the counter electrode (5) is disposed adjacent to the second aperture (3), wherein the first (2) and second (3) apertures are disposed on the same side of the sensor housing (12) and the measuring electrode (6) and the counter electrode (5) are disposed on the same side of the housing, wherein at least one isolating device (11) is interposed between the measuring electrode (6) and the counter electrode (5).

2. The oxygen sensor according to claim 1, wherein the first aperture (2) comprises a diffusion barrier.

3. The oxygen sensor according to claim 2, wherein the diffusion barrier (2) is selected from films, membranes and capillaries.

4. The oxygen sensor according to any one of the preceding claims, wherein the second aperture (3) is closed by an oxygen permeable membrane or seal.

5. The oxygen sensor according to any one of the preceding claims, wherein the housing (12) comprises a lid (4) in which the first (2) and second (3) apertures are disposed.

6. The oxygen sensor according to claim 1, wherein the isolating device (11) is planar, box-shaped or cylindrical.

7. The oxygen sensor according to any one of the preceding claims, wherein the oxygen diffusion distance between the measuring electrode and the counter electrode is at least 1 mm.

8. The oxygen sensor according to any one of the preceding claims, wherein the isolating device (11) is made of an impermeable material selected from plastics, ceramics, metal and glass.

9. The oxygen sensor according to any one of the preceding claims, wherein the measuring electrode (6) and the counter electrode (5) are disposed concentrically with respect to each other.

10. The oxygen sensor according to any one of the preceding claims, wherein the measuring electrode (6) and the counter electrode (5) are disposed in the same plane or offset with respect to each other.

11. The oxygen sensor according to any one of the preceding claims, wherein the electrodes (5, 6, 9) are independently made of a metal selected from a metal of the Pt group, the Ir group and the Cu group of the periodic table.

12. The oxygen sensor according to any one of the preceding claims, wherein the electrodes (5), (6) and (9) are independently made of a metal selected from Pt, Ir, Au, Pd, Ru and Ag.

13. The oxygen sensor according to any one of the preceding claims, wherein the electrolyte is an aqueous electrolyte selected from organic electrolytes and acids.

14. The oxygen sensor according to any one of the preceding claims, wherein the electrolyte is a hygroscopic acid.

15. Use of an oxygen sensor according to any one of the preceding claims for the detection of oxygen and/or the measurement of oxygen concentration in a sample.

16. A method of detecting and/or measuring oxygen, comprising the steps of
(a) providing an oxygen sensor according to claim 1,
(b) generating a bias between the measuring electrode and the reference electrode of -300 mV to -800mV,
(c) allowing an oxygen gradient to form between the measuring electrode and the counter electrode,
(d) contacting the measuring electrode with a sample containing oxygen to be detected,
(e) detecting the current between the measuring electrode and the counter electrode, wherein the current is proportional to the oxygen concentration of the sample,
wherein the oxygen gradient is maintained by
(i) allowing the oxygen generated at the counter electrode to escape from the chamber at the site of its generation, and/or
(ii) interposing an isolating device between the measuring electrode and the counter electrode in such a way that the time for the diffusion of oxygen from the counter electrode to the measuring electrode is longer than the response time of the sensor.

## Patentansprüche

1. Elektrochemischer Sauerstoffsensor (1), umfassend ein Gehäuse (12), welches eine mit Elektrolyt gefüllte Kammer umschließt, mindestens eine Messelektrode (6) zum Detektieren von Sauerstoff, mindestens eine Gegenelektrode (5) und mindestens eine Referenzelektrode (9), wobei das Gehäuse (12) mindestens eine erste Öffnung (2) zum Zulassen des Kontaktierens der Messelektrode durch Sauerstoff und mindestens eine zweite Öffnung (3) zum Zulassen des Entweichens von Sauerstoff aus der Kammer umfasst, wobei die Gegenelektrode (5) benachbart zu der zweiten Öffnung (3) angeordnet ist, wobei die ersten (2) und zweiten (3) Öffnungen auf der selben Seite des Sensorgehäuses (12) angeordnet sind, und die Messelektrode (6) und die Gegenelektrode (5) auf der selben Seite des Gehäuses angeordnet sind, wobei mindestens eine isolierende Vorrichtung (11) zwischen die Messelektrode (6) und die Gegenelektrode (5) zwischengeschaltet ist.

2. Sauerstoffsensor nach Anspruch 1, wobei die erste Öffnung (2) eine Diffusionsbarriere umfasst.

3. Sauerstoffsensor nach Anspruch 2, wobei die Diffusionsbarriere (2) ausgewählt ist aus Folien, Membranen und Kapillaren.

4. Sauerstoffsensor nach einem der vorangehenden Ansprüche, wobei die zweite Öffnung (3) durch eine sauerstoffpermeable Membran oder Dichtung verschlossen ist.

5. Sauerstoffsensor nach einem der vorangehenden Ansprüche, wobei das Gehäuse (12) einen Deckel (4) umfasst, in welchem die ersten (2) und zweiten (3) Öffnungen angeordnet sind.

6. Sauerstoffsensor nach Anspruch 1, wobei die isolierende Vorrichtung (11) planar, kastenförmig oder zylindrisch ist:

7. Sauerstoffsensor nach einem der vorangehenden Ansprüche, wobei der Sauerstoffdiffusionsabstand zwischen der Messelektrode und der Gegenelektrode mindestens 1 mm ist.

8. Sauerstoffsensor nach einem der vorangehenden Ansprüche, wobei die isolierende Vorrichtung (11) aus einem impermeablen Material, ausgewählt aus Kunststoff, Keramik, Metall und Glas, hergestellt ist.

9. Sauerstoffsensor nach einem der vorangehenden Ansprüche, wobei die Messelektrode (6) und die Gegenelektrode (5) zueinander konzentrisch angeordnet sind.

10. Sauerstoffsensor nach einem der vorangehenden Ansprüche, wobei die Messelektrode (6) und die Gegenelektrode (5) in der selben Ebene oder gegeneinander versetzt angeordnet sind.

11. Sauerstoffsensor nach einem der vorangehenden Ansprüche, wobei die Elektroden (5, 6, 9) unabhängig hergestellt sind aus einem Metall, ausgewählt aus einem Metall der Pt-Gruppe, der Ir-Gruppe und der Cu-Gruppe des Periodensystems.

12. Sauerstoffsensor nach einem der vorangehenden Ansprüche, wobei die Elektroden (5), (6) und (9) unabhängig hergestellt sind aus einem Metall, ausgewählt aus Pt, Ir, Au, Pd, Ru und Ag.

13. Sauerstoffsensor nach einem der vorangehenden Ansprüche, wobei der Elektrolyt ein wässriger Elektrolyt ausgewählt aus organischen Elektrolyten und Säuren ist.

14. Sauerstoffsensor nach einem der vorangehenden Ansprüche, wobei der Elektrolyt eine hygroskopische Säure ist.

15. Verwendung eines Sauerstoffsensors nach einem der vorangehenden Ansprüche zur Detektion von Sauerstoff und/oder zur Messung von Sauerstoffkonzentration in einer Probe.

16. Verfahren zum Detektieren und/oder Messen von Sauerstoff, umfassend die Schritte von
(a) Bereitstellen eines Sauerstoffsensors nach Anspruch 1,
(b) Erzeugen eines Bias zwischen der Messelektrode und der Referenzelektrode von -300 mV bis -800mV,
(c) Zulassen, dass sich ein Sauerstoffgradient zwischen der Messelektrode und der Gegenelektrode bildet,
(d) Inkontaktbringen der Messelektrode mit einer Probe, die zu detektierenden Sauerstoff enthält,
(e) Detektieren des Stroms zwischen der Messelektrode und der Gegenelektrode, wobei der Strom proportional zur Sauerstoffkonzentration der Probe ist,
wobei der Sauerstoffgradient aufrecht erhalten wird durch
(i) Zulassen, dass der an der Gegenelektrode erzeugte Sauerstoff aus der Kammer an der Stelle seiner Erzeugung entweicht, und/oder
(ii) Zwischenschalten einer isolierenden Vorrichtung zwischen die Messelektrode und die Gegenelektrode auf eine solche Weise, dass die Zeit für die Diffusion des Sauerstoffs von der Gegenelektrode zu der Messelektrode länger als die Antwortzeit des Sensors ist.

## Revendications

1. Capteur électrochimique d'oxygène (1), comprenant un boîtier (12) renfermant une chambre remplie d'électrolyte, au moins une électrode de mesure (6) pour détecter l'oxygène, au moins une contre-électrode (5), et au moins une électrode de référence (9), dans lequel le boîtier (12) comprend au moins une première ouverture (2) pour permettre à l'oxygène d'être en contact avec l'électrode de mesure et au moins une seconde ouverture (3) pour permettre à l'oxygène de s'échapper de la chambre, dans lequel la contre-électrode (5) est disposée de manière adjacente à la seconde ouverture (3), dans lequel la première (2) et seconde (3) des ouvertures sont disposées sur le même côté du boîtier de capteur (12) et l'électrode de mesure (6) et la contre-électrode (5) sont disposées sur le même côté du boîtier, dans lequel au moins un dispositif d'isolement (11) est interposé entre l'électrode de mesure (6) et la contre-électrode (5).

2. Capteur d'oxygène selon la revendication 1, dans lequel la première ouverture (2) comprend une barrière de diffusion.

3. Capteur d'oxygène selon la revendication 2, dans lequel la barrière de diffusion (2) est choisie parmi des films, des membranes et des capillaires.

4. Capteur d'oxygène selon l'une quelconque des revendications précédentes, dans lequel la seconde ouverture (3) est fermée par une membrane perméable à l'oxygène ou un joint.

5. Capteur d'oxygène selon l'une quelconque des revendications précédentes, dans lequel le boîtier (12) comprend un couvercle (4) dans lequel sont disposées la première (2) et la deuxième (3) ouvertures.

6. Capteur d'oxygène selon la revendication 1, dans lequel le dispositif d'isolement (11) est plan, en forme de boîte ou cylindrique.

7. Capteur d'oxygène selon l'une quelconque des revendications précédentes, dans lequel la distance de diffusion de l'oxygène entre l'électrode de mesure et la contre-électrode est d'au moins 1 mm.

8. Capteur d'oxygène selon l'une quelconque des revendications précédentes, dans lequel le dispositif d'isolement (11) est fait d'un matériau imperméable choisi parmi les matières plastiques, la céramique, le métal et le verre.

9. Capteur d'oxygène selon l'une quelconque des revendications précédentes, dans lequel l'électrode de mesure (6) et la contre-électrode (5) sont disposées de façon concentrique l'une par rapport à l'autre.

10. Capteur d'oxygène selon l'une quelconque des revendications précédentes, dans lequel l'électrode de mesure (6) et la contre-électrode (5) sont disposées dans le même plan ou décalées l'une par rapport à l'autre.

11. Capteur d'oxygène selon l'une quelconque des revendications précédentes, dans lequel les électrodes (5, 6, 9) sont indépendamment faites d'un métal choisi parmi un métal du groupe Pt, du groupe Ir et du groupe Cu de la classification périodique.

12. Capteur d'oxygène selon l'une quelconque des revendications précédentes, dans lequel les électrodes (5), (6) et (9) sont indépendamment faites d'un métal choisi parmi Pt, Ir, Au, Pd, Ru et Ag.

13. Capteur d'oxygène selon l'une quelconque des revendications précédentes, dans lequel l'électrolyte est un électrolyte aqueux choisi parmi les électrolytes organiques et les acides.

14. Capteur d'oxygène selon l'une quelconque des revendications précédentes, dans lequel l'électrolyte est un acide hygroscopique.

15. Utilisation d'un capteur d'oxygène selon l'une quelconque des revendications précédentes pour la détection de l'oxygène et/ou la mesure de la concentration en oxygène dans un échantillon.

16. Procédé de détection et/ou de mesure de l'oxygène, comprenant les étapes consistant à
(a) fournir un capteur à oxygène selon la revendication 1,
(b) générer une polarisation entre l'électrode de mesure et l'électrode de référence de -300 mV à -800 mV,
(c) permettre la formation d'un gradient d'oxygène entre l'électrode de mesure et la contre-électrode,
(d) mettre en contact l'électrode de mesure avec un échantillon contenant de l'oxygène à être détecté,
(e) détecter le courant entre l'électrode de mesure et la contre-électrode, dans lequel le courant est proportionnel à la concentration en oxygène de l'échantillon,
dans lequel le gradient d'oxygène est maintenu en
(i) permettant l'oxygène produit à la contre-électrode de s'échapper de la chambre à l'endroit de sa génération, et/ou
(ii) en interposant un dispositif d'isolement entre l'électrode de mesure et la contre-électrode de telle sorte que le temps de diffusion de l'oxygène de la contre-électrode à l'électrode de mesure est plus long que le temps de réponse du capteur.
